# EUROPEAN PATENT APPLICATION

(11) **EP 0 543 610 A2**
(43) Date of publication of application: **26.05.1993**
(21) Application number: 92310463.2
(22) Date of filing: 17.11.1992
(51) Int. Cl.: G06F 9/44

(54) **Data processing system**

(30) Priority: 18.11.1991 JP 328349/91
(71) Applicant: International Business Machines Corporation, Armonk, N.Y. 10504 (US)
(72) Inventor: Funaki, Yoshiaki, Yokohama-shi, Kanagawa-ken (JP); Kawai, Kenichi, Machida-shi, Tokyo-to (JP); Kawasaki, Kenji, Kawasaki-shi, Kanagawa-ken (JP); Nishino, Yasuko, Yokohama-shi, Kanagawa-ken (JP)
(74) Representative: Burt, Roger James, Dr.

(57) **Abstract**

Described is a data processing system in which different kinds of system environments can be implemented concurrently to allow application programs for different kinds of systems to run concurrently within a single system. The data processing system includes emulation means for emulating concurrently each of the different kinds of system environments to a system control program (operating system). This facilitates the sharing of resources or communication between the application programs.

## Description

The present invention relates to a data processing system in which plural application programs created for different kinds of system environments can be run concurrently.

It is advantageous to run plural application programs created for different kinds of system environments concurrently on a single system. For example, an operating system called DOS (Disk Operating System) is widely used as an operating system for personal computers. However, even if DOS is installed in two personal computers, their system environments may be different from one another. The environments may be different first for the reason that there are different kinds of DOS itself and second for the reason that application programs for DOS frequently access BIOS (basic input/output system) or hardware directly and therefore DOS cannot cover up differences in the types of hardware.

The ability to run plural application programs created for different kinds of system environments on a single system is known. However, these prior systems are arranged such that multiple kinds of OSs (Operating systems) are retained in a hard disk, etc. and any of the OSs is selectively installed, at a time of system reset, etc., in a system memory. Therefore, according to the prior art, only one system environment can exist at any one time, which prevents the sharing of resources or communication between the plural application programs.

The present invention seeks to implement different kinds of system environments concurrently on a single system and allow application programs for different kinds of systems to run concurrently on a single system.

Accordingly, the invention provides a data processing system adapted to run application programs in different kinds of system environments concurrently, comprising:
a microprocessor for executing said programs;
a system memory for storing said programs; and
a system control program including emulation means for emulating each of the different kinds of system environments concurrently in the system according to data associated with each application program which defines the system environment to be emulated for that application program.

A preferred embodiment of the invention will now be described, by way of example only, with reference to the accompanying drawings in which:

FIG.1 is a block diagram shoving the configuration of an embodiment of an operating system according to the present invention.

FIG.2 is a block diagram showing the configuration of a virtual device driver of said embodiment.

FIG.3 is a block diagram showing the configuration of a logic memory of said embodiment.

FIG.4. is a block diagram showing the configuration of an embodiment of an information processing system according to the present invention.

FIG.5 is a front view showing the configuration of a menu screen for setting properties of said embodiment.

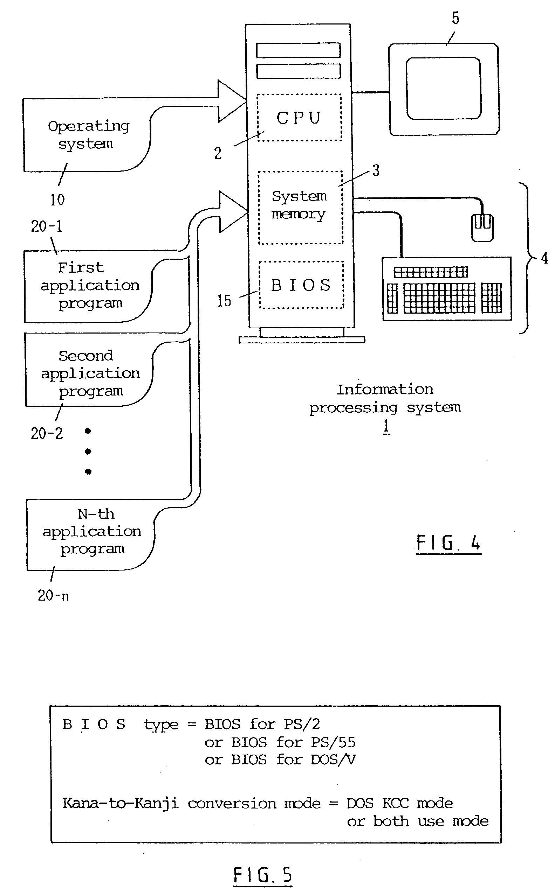

FIG.4 shows an embodiment of an information processing system according to the present invention. In the figure, an information processing system 1 includes a microprocessor (CPU) 2 for execution of a program, a system memory 3 for storing said program, an input device group 4 for inputting instructions or data required for the execution of said program, and an output device group 5 such as a display unit, etc. for outputting a result of the execution of said program. Said program includes a system control program (operating system) 10, a basic input/output system (physical BIOS, or PBIOS) 15 retained in a ROM, etc., and N application programs (20-1 to 20-n). These application programs 20-1 to 20-n are application programs developed for different kinds of system environments.

As used in the present description 'system' refers to an information processing apparatus into which an operating system is installed, and includes a BIOS retained in a ROM which is usually provided in the information processing apparatus. Examples of different kinds of systems are the IBM PS/2 personal computer (PS/2 is a trademark of International Business Machines Corporation) into which a PC-DOS is installed and the IBM PS/55 personal computer (PS/55 is a trademark of International Business Machines Corporation) into which Japanese DOS is installed. An OADG (Open Architecture Developer Group) personal computer into which DOS/V is installed is another example of such a system. PC-DOS is commonly used as a standard operating system for personal computers in U.S., while Japanese DOS is an operating system, with Japanese support functions added to the PC-DOS, adapted for use in Japan. DOS/V is a operating system capable of handling Japanese using a standard video adapter card, which is called VGA (Video Graphics Array), used in the U.S. and OADG (Open Architecture Developers Group) is a group of companies which develop personal computers with functions capable of handling Japanese, a standard operating system of which is the DOS/V. Hereinafter, an individual system environment provided to each of the application programs 20-1, 20-n to be run concurrently is called a virtual DOS machine (VDM).

The PS/2 keyboard is designed primarily for users of the English language while the PS/55 keyboard is designed for users of Japanese. The PS/2 and the PS/55 personal computers are also different from each other also in the resolution of the display unit, access method, I/O functions and also in the BIOSs provided to them. For example, a function not provided to a BIOS for the PS/2 is provided to a BIOS for the PS/55 or the same interface (INT xxH) becomes a request for different function between the BIOS for the PS/2 and the BIOS for the PS/55. Now it is assumed that one of the N application programs (20-1 to 20-n) is an application program 20-a for the PC-DOS, another one of them is an application program 20-b for the Japanese DOS, and a still another one of them is an application program 20-c for the DOS/V. The CPU 2 is a microprocessor whose trade name is, for example, the Intel 80386 or 80486 and the first application programs (20-1 to 20-n) are run concurrently under a virtual 86(V86) mode provided to the microprocessor on the system 1. The term "concurrently" means that "timesharing multitasking" operations are performed.

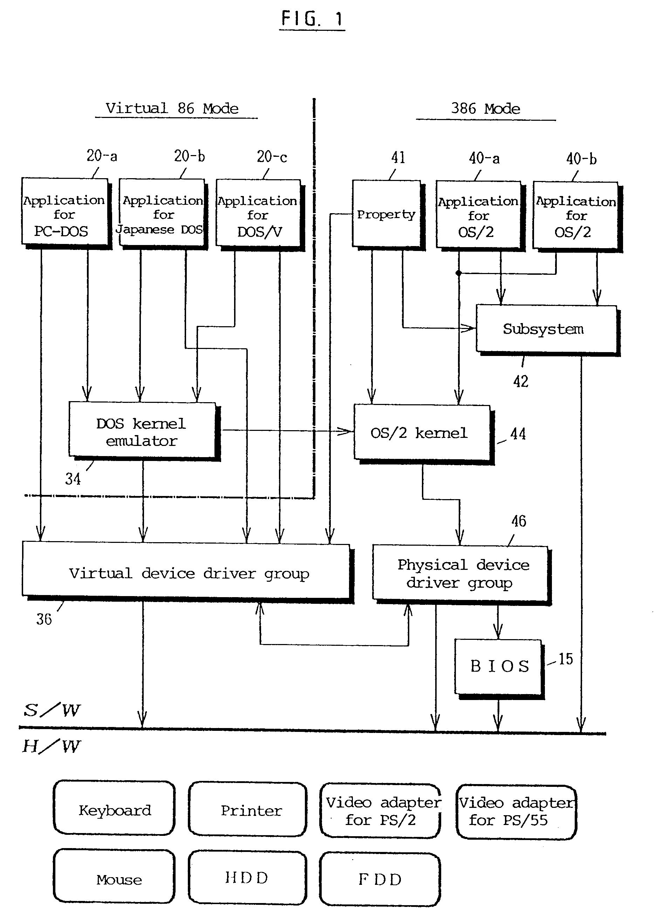

FIG.1 shows the configuration of the operating system 10 according to the present invention. The operating system 10 operates in the virtual 86 mode and a 386 mode of the CPU 2. In the figure, the application program 20-a for PC-DOS, the application program 20-b for Japanese DOS, and the application program 20-c for DOS/V run under the virtual 86 mode of the CPU. The application program 20-a for PC-DOS issues a system call (for example, INT 20H/21H/25H/26H) to the PC-DOS, a BIOS call (for example, INT 10H/11H/12H/13H/14H/15H/16H/17H/18H/19H/1AH/1FH) to a BIOS installed in such personal computers as the PS/2, etc., and a direct input/output instruction (IN IO address/OUT IO address) for the hardware of the PS/2, etc. The application program 20-b for Japanese DOS issues a system call (for example, INT 20H/21H/25H/26H) to the Japanese DOS, a BIOS call (for example, INT 10H/11H/12H/13H/14H/15H/16H/17H/18H/19H/1AH/1FH/7DH) to a BIOS installed in such personal computers as the PS/55, etc., and a direct input/output instruction (IN IO address/OUT IO address) for the hardware of the PS/55, etc. A system call, a BIOS call, and a direct I/O instruction for the hardware issued by the application program 20-c for DOS/V have a different part from some ones of the above two application programs 20-a and 20-b.

The Japanese DOS has Japanese support functions added to the PC-DOS. However, the Japanese DOS and the PC-DOS differ somewhat in parts other than the Japanese support functions. Further the DOS/V differs somewhat from the Japanese DOS or the PC-DOS. A system call issued by the application programs 20-a, 20-b, and 20c is provided to a DOS kernel emulator 34 which operates in the virtual 86 mode, and on the other hand a BIOS call and a direct I/O instruction for the hardware issued by the application programs 20-a, 20-b, and 20-c are provided to a virtual device driver group 36 which operates in the 386 mode. The DOS kernel emulator 34 emulates a system call, requests further processing by the virtual device driver group 36, as required, or issues a system call to an OS/2 kernel 44 which operates in the 386 mode in the cases of system calls as file open, file read/write, etc. so that a system call issued by the application programs 20-a, 20-b, and 20-c can be executed.

A system environment provided, by the virtual device driver group 36, to the application programs 20-a, 20-b, and 20-c is determined according to the contents of setting of a property 41. Applications 40-a and 40-b for OS/2 are application programs that run in the 386 mode of the CPU 2. These application programs access, through a subsystem 42, to a hardware group or, through the OS/2 kernel 44, to a physical device driver 46. The physical device driver 46 accesses the hardware group either directly or via BIOS 15.

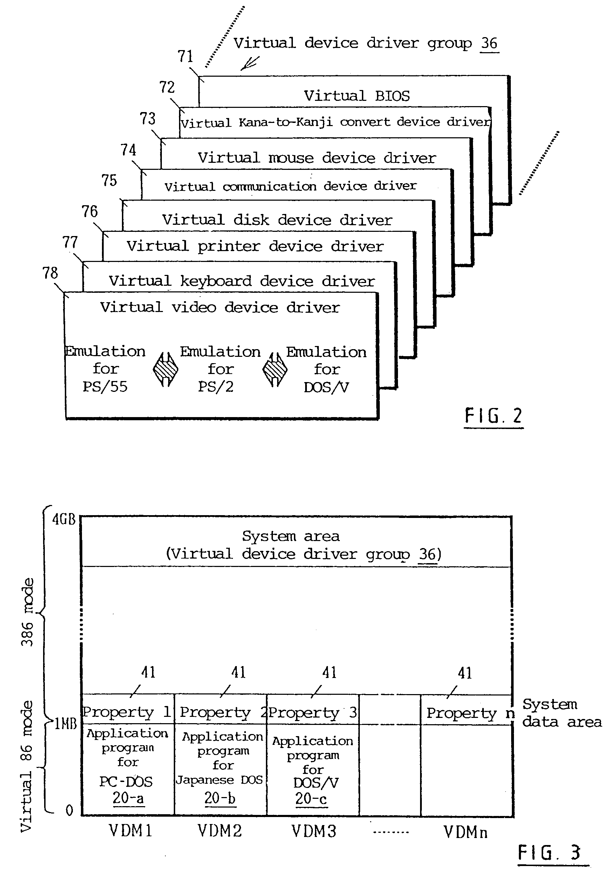

Fig.2 shows the details of the virtual device driver group 36. The virtual device driver group 36 has a role of implementation of virtual access to BIOS or the hardware from the application programs 20-a, 20-b, and 20-c. The virtual device driver group 36 comprises a virtual BIOS 71, a virtual Kana-to-Kanji convert device driver 72, a virtual mouse device driver 73, a virtual communication device driver 74, a virtual disk device driver 75, a virtual printer device driver 76, a virtual keyboard device driver 77, and a virtual video device driver 78.

The function of the virtual BIOS 71 is to selectively provide one of three BIOS environments to each of the application programs 20-a, 20-b, and 20-c. The three BIOS environments mentioned above mean an emulator of a BIOS (US-BIOS) for PS/2, an emulator of a BIOS (Japanese BIOS) for PS/55, and an emulator of a BIOS for DOS/V. The user can select one of the three BIOS environments for each VDM using the property 41. The function of the property 41 is to allow a DOS environment or a BIOS environment to be set for each VDM and the property 41 is a system data area for describing the DOS environment or the BIOS environment for each VDM. The virtual BIOS 71, the virtual device driver 72, etc. determine the type of emulation according to the contents of description in the property 41. The virtual BIOS 71 is loaded into the system memory 3 and initialized earlier than other virtual device drivers 72 and others. The virtual BIOS 71 provides flags indicating the data areas of the US-BIOS, the Japanese BIOS, and the BIOS for DOS/V and a BIOS mode.

As shown in FIG.3, the virtual BIOS 71 provides a predetermined capacity (for example, 1M bytes) of memory space for each VDM as a work area for an application program for DOS. The work area is used under the virtual 86 mode of the CPU 2. A system call, a BIOS call, or a direct access request for the hardware issued by the application program for DOS switches an operation mode to the 386 mode. In this case, reference to a property is made and the contents of the property determines which system environment is provided by the operation of the virtual device driver group 36. The device driver group 36 is provided in a system area, and logically provided for each application program for DOS, but physically shared, through the use of a paging function, between the application programs for DOS. The remaining areas of the system memory 3 are assigned to programs for supporting fundamental functions of the operating system 10 of the embodiment.

To run plural application programs for DOS concurrently, it is necessary that the operating system 10 manages access to the resources of the information processing system 1 from the application programs. Such resources as the input device group 4 and the output device group 5 must be assigned to an application program in a foreground. On the other hand, virtual resources must be assigned to an application program in a background. The virtual device driver group 36 creates virtual resources, which are assigned to an application programs in the background. For example, the virtual video device driver 78 has a virtual video buffer corresponding to a specified system environment in a predetermined area of the system memory 3. The application program in the background accesses the virtual video buffer as if it is a physical video buffer. Data written in the virtual video buffer is expanded, when the application program in the background is switched from background to foreground, into the physical video buffer.

When the operating system 10 is loaded into the system memory 3, a menu is displayed on the screen of an output device. The user can select a system environment through the menu. The menu can be called whenever the system is operating. Once the menu is called, the user can create a new system environment or switch to a system environment previously created under an operation. In the following, an example of the operating procedures of the user is described.
Operating procedure 1: Creates a system environment for PS/2 through the menu.
Operating procedure 2: Initiates an application program for PS-DOS.
Operating procedure 3: Calls the menu.
Operating procedure 4: Creates a system environment for PS/55 through the menu.
Operating procedure 5: Initiates an application program for Japanese DOS.
Operating procedure 6: Calls the menu.
Operating procedure 7: Creates a second system environment for PS/2 through the menu.
Operating procedure 8: Calls the menu.
Operating procedure 9: Switches to the first system environment for PS/2 through the menu.

FIG.5 shows an example of the contents of a menu to be displayed. The user sets, through such a menu, the contents of a property. In the example of FIG.5, the user can select a BIOS type for a system environments to be established from US-BIOS (BIOS for PS/2), Japanese BIOS (BIOS for PS/55), and BIOS for DOS/V. If the Japanese BIOS or the BIOS for DOS/V is selected, either a DOS KCC mode or a both use mode can be selected. The DOS KCC mode is a Kana-to-Kanji conversion mode for using a DOS-dedicated Kana-to-Kanji converting frontend processor, and on the other hand a both use mode is a Kana-to-Kanji conversion mode for using together Kana-to-Kanji conversion provided by the operating system 10.

As described above, if a BIOS type is specified for a property, the virtual device driver group 36 establishes a virtual system environment, based on the BIOS type specified, as any one for PS/2, PS/55, or DOS/V. If the US-BIOS is specified, in order to establish a virtual system environment for emulating the PS/2 , the virtual device driver group 36 configured so that an English environment and an interface to a BIOS for the PS/2, and the hardware of the PS/2 are supported, is provided to a VDM. If the Japanese BIOS is specified, in order to establish a virtual system environment for emulating the PS/55, the virtual device driver group 36 configured so that a Japanese environment and an interface to a BIOS for the PS/55, and the hardware of the PS/55 are supported, is provided to a VDM. If the BIOS for DOS/V is specified, in order to establish a virtual system environment for emulating the OADG personal computer, the virtual device driver group 36 configured so that a Japanese environment and an interface to a BIOS for the OADG personal computer, and the hardware of the OADG personal computer are supported, is provided to a VDM.

When a VDM is created, the virtual device driver group 36 initializes system parameters incidental to hardware according to the specification of a property. For example, the virtual video device driver 78, sets initial parameters, according to the specification of a property, to a video adapter (display adapter) for the PS/2, a video adapter for PS/55, or a video adapter for the OADG personal computer. Further, it assigns virtual display buffer for an application program in the background. Still further, it provides a virtual I/O address of a video adapter. For example, the virtual keyboard device driver 77 provides a scan code conversion table, according to the specification of a property, for the PS/2, the PS/55, or the OADG personal computer. For the Japanese system environment, in addition to the above, it establishes an interface to the Kana-to-Kanji conversion program. Additionally, the virtual device driver group 36 initializes parameters for the related BIOSs.

By means of the virtual device driver group 36, a virtual system environment is provided for each application program as follows. That is, provided for an application program for PC-DOS are the English environment, the BIOS interface for PS/2, and the hardware environment or PS/2 (video adapter emulation, keyboard adapter emulation, scan code conversion table, printer data stream emulation, etc.). Provided for an application program for Japanese DOS are the Japanese environment, the BIOS interface for PS/55, and the hardware environment of PS/55 (video adapter emulation, keyboard adapter emulation, scan code conversion table, printer data stream emulation, etc.). Provided for an application program for DOS/V are the Japanese environment, the BIOS interface for the OADG personal computer, and the hardware environment of the hardware of OADG personal computer (video adapter emulation, keyboard adapter emulation, scan code conversion table, printer data stream emulation, etc.).

The above different kinds of system environments are run concurrently under the operating system 10, which is a multi-tasking operating system. An operation (hot key operation) by the user or a programming interface causes the foreground and the background to be switched to each other. In such switching, the virtual device driver group 36 switches physical hardware and virtual hardware to each other.

As described above, according to the embodiment, application programs for different kinds of DOSs can run concurrently on a single personal computer. Further, plural language environments being provided at the same time, for example, English, Japanese, and Korean application program can run concurrently. Still further, application programs for different kinds of DOSs running concurrently, the functions of each application program can be shared among the application programs. For example, if it is assumed that a communication program can run only under the PC-DOS and a wordprocessor program can run only under the Japanese DOS, then, according to the embodiment, the communication program can receive data and the wordprocessor program can edit the data. Further, application programs for different kinds of DOSs running concurrently, the sharing of system resources is promoted, and therefore, for example, the screen information of a VDM for PC-DOS can be inputted as the key information of a VDM for Japanese DOS.

It will be appreciated that the embodiment is applied not only to three different kinds of system environments, but also to plural different kinds of system environments other than the three different kinds of system environments. It will be appreciated also that a virtual system environment is not limited to the embodiment described above.

## Claims

1. A data processing system (1) adapted to run application programs in different kinds of system environments concurrently, comprising:
a microprocessor (2) for executing said programs;
a system memory (3) for storing said programs; and
emulation means for emulating each of the different kinds of system environments concurrently in the system according to data associated with each application program which defines the system environment to be emulated for that application program.

2. A data processing system as claimed in the claim 1, wherein emulation means includes virtual device drivers for emulating interfaces between the application programs and a system control program for each of the different kinds of system environments, interfaces between the application programs and device drivers for each of the different kinds of environments, interfaces between the application programs and BIOSs for each of different kinds of system environments, and interfaces between the application programs and hardware for each of the different kinds of system environments.

3. A data processing system as claimed in claim 1 or claim 2, wherein the data defining the system environment to be emulated is described in a system data area in system memory the virtual device drivers emulate the system environment based on said data.
